# EUROPÄISCHE PATENTSCHRIFT

(11) **EP 4 281 736 B1**
(45) Veröffentlichungstag und Bekanntmachung des Hinweises auf die Patenterteilung: **21.05.2025**
(21) Anmeldenummer: 22700496.7
(22) Anmeldetag: 13.01.2022
(51) Int. Cl.: G01K 1/024

(54) **KERNTEMPERATURFÜHLER UND TEMPERATURÜBERWACHUNGSSYSTEM**
CORE TEMPERATURE PROBE AND TEMPERATURE MONITORING SYSTEM
SONDE DE TEMPÉRATURE INTERNE ET SYSTÈME DE SURVEILLANCE DE TEMPÉRATURE

(30) Priorität: 25.01.2021 EP 21290002
(43) Veröffentlichungstag der Anmeldung: 29.11.2023
(73) Patentinhaber: BSH Hausgeräte GmbH, 81739 München (DE)
(72) Erfinder: CADEAU, Christophe, 67113 Blaesheim (FR)
(86) Internationale Anmeldenummer: PCT/EP2022/050614
(87) Internationale Veröffentlichungsnummer: WO 2022/157064

(56) Entgegenhaltungen:
- EP-A1- 2 233 899
- DE-A1- 3 119 496

## Beschreibung

Die Erfindung betrifft einen Kerntemperaturfühler, aufweisend einen Einsteckabschnitt (4) mit mindestens einem Temperatursensor und eine mit den Temperatursensoren verbundene Datenübertragungseinrichtung, die dazu eingerichtet ist, mittels des mindestens einen Temperatursensors abgefühlte Temperaturmessdaten drahtlos zu übermitteln. Die Erfindung betrifft auch ein Temperaturüberwachungssystem, das mindestens den Kerntemperaturfühler und eine mit der Datenübertragungseinrichtung des Kerntemperaturfühlers datentechnisch koppelbare Anzeigeeinrichtung aufweist, wobei die Anzeigeeinrichtung dazu eingerichtet ist, von der Datenübertragungseinrichtung des Kerntemperaturfühlers übertragene Messdaten anzuzeigen. Die Erfindung ist besonders vorteilhaft einsetzbar zur Temperaturmessung von Lebensmitteln.

WO 2016/210356 A1 offenbart ein Lebensmittelthermometer zum Messen einer Temperatur eines Lebensmittels, das Wärme ausgesetzt ist, wobei das Lebensmittelthermometer umfasst: einen ersten Abschnitt, der wärmeempfindliche elektronische Komponenten enthält, wobei der erste Abschnitt konfiguriert ist, um in dem Lebensmittel positioniert zu werden; einen zweiten Abschnitt, der mit dem ersten Abschnitt verbunden ist, wobei mindestens der erste Abschnitt oder der zweite Abschnitt einen Wärmesensor zum Erfassen der Temperatur des Lebensmittels enthält; und einen dritten Abschnitt, der mit dem zweiten Abschnitt verbunden ist, wobei der dritte Abschnitt eine Antenne zum drahtlosen Übertragen von Daten basierend auf der erfassten Temperatur des Lebensmittels enthält.

US 2019/0339133 A1 offenbart ein drahtloses Temperaturmesssystem, umfassend (a) eine oder mehrere Temperatursonden, die jeweils einen oder mehrere Energiespeicherkondensatoren enthalten, die die elektrische Energie für den Betrieb der einen oder mehreren Sonden liefern, und (b) eine Sondenladestation mit einer Schaltung, die konfiguriert ist, um die Energiespeicherkondensatoren mit elektrischer Ladung zu versorgen, bevor die Temperatursonden positioniert werden, um die Temperatur zu messen.

WO 2016/058616 A1 offenbart ein drahtloses Kochthermometersystem, umfassend: eine Lebensmitteltemperaturanzeige, die konfiguriert ist, um eine Temperaturmessung bereitzustellen, eine drahtlose Sendeeinheit, die betriebsmäßig mit der Lebensmitteltemperaturanzeige verbunden ist, um eine Temperaturmessung davon zu empfangen und eine Information, die die Temperaturmessung darstellt, drahtlos zu übertragen.

DE 10 2018 108 223 A1 offenbart ein Thermometer, umfassend eine erste Sensoreinheit, die dazu konfiguriert ist, eine innere Temperatur eines überwachten Objekts zu erfassen, um einen ersten Temperaturwert zu erzeugen; eine zweite Sensoreinheit, die dazu konfiguriert ist, eine Umgebungstemperatur außerhalb des überwachten Objekts zu erfassen, um einen zweiten Temperaturwert zu erzeugen; eine Antenne; eine drahtlose Kommunikationseinheit, die dazu konfiguriert ist, mit der ersten Sensoreinheit, der zweiten Sensoreinheit und der Antenne elektrisch verbunden zu werden, wobei die drahtlose Kommunikationseinheit einen Speicher umfasst, der einen ersten vorherigen Temperaturwert und einen zweiten vorherigen Temperaturwert speichert, wobei die drahtlose Kommunikationseinheit zuerst eine Überwachungszeit zählt und eine Messprozedur durchführt, um: den ersten vorherigen Temperaturwert und den zweiten vorherigen Temperaturwert aus dem Speicher zu laden; den ersten Temperaturwert und den zweiten Temperaturwert von der ersten Sensoreinheit und der zweiten Sensoreinheit zu erhalten; ein Temperaturinformationssignal zu erzeugen und drahtlos zu übertragen, wenn die Differenz zwischen dem ersten Temperaturwert und dem ersten vorherigen Temperaturwert einen ersten Schwellenwert übersteigt oder wenn die Differenz zwischen dem zweiten Temperaturwert und dem zweiten vorherigen Temperaturwert einen zweiten Schwellenwert übersteigt, sonst Verlassen der Messprozedur; den ersten Temperaturwert und den zweiten Temperaturwert nach dem übertragen des Temperaturinformationssignals in dem Speicher zu speichern, um jeweils den ersten vorherigen Temperaturwert und den zweiten vorherigen Temperaturwert in dem Speicher zu ersetzen, und dann die Messprozedur zu verlassen; wobei die drahtlose Kommunikationseinheit nach der Messprozedur eine Zeitintervallerzeugungsprozedur durchführt, um: ein Zeitintervall gemäß der Überwachungszeit und dem zweiten Temperaturwert zu bestimmen; und zu bestimmen, ob die Messprozedur beendet ist; die Messprozedur nach dem Zeitintervall nochmals auszuführen, wenn die Messprozedur nicht beendet ist; und in einen Energiesparmodus zu schalten, wenn die Messprozedur beendet ist, und eine Batterieeinheit, die dazu konfiguriert ist, mit der drahtlosen Kommunikationseinheit elektrisch verbunden zu werden, um für die drahtlose Kommunikationseinheit Ausgangsspannung bereitzustellen; wobei das Temperaturinformationssignal Temperaturinformationen umfasst und die Temperaturinformationen den ersten Temperaturwert und den zweiten Temperaturwert umfassen.

EP 1 624 724 A1 offenbart eine Sonde zum Erfassen mindestens eines Parameters während der Wärmebehandlung eines Lebensmittelprodukts, umfassend eine Sensoreinrichtung, die zum Erfassen eines Werts des mindestens einen Parameters geeignet ist, eine Antenneneinrichtung zum Übermitteln des Werts an eine Steuerungsvorrichtung zum Steuern der Wärmebehandlung in Abwesenheit von Verbindungskabeln, wobei die Sonde Versorgungsmittel eines anderen Typs als des elektrochemischen Typs umfasst.

US 6,568,848 B1 offenbart ein drahtloses Fernkochthermometersystem, umfassend: eine erste Handhabungseinheit, die entfernbar an einer ersten Stelle neben dem zu kochenden Lebensmittel positionierbar ist, wobei die erste Handhabungseinheit eine erste Flüssigkristallanzeige enthält und unter Verwendung eines Hochfrequenzsenders arbeitet, der angepasst ist, Temperaturwerte übertragen; einen Temperatursensor, der mit der ersten Handhabungseinheit verbunden ist, wobei der Temperatursensor einen im wesentlichen starren Temperaturfühler mit einem gekrümmten Abschnitt enthält, der in das zu kochende Lebensmittel eingeführt werden kann, und eine im Wesentlichen flexible Kommunikationsleitung, die sich zwischen der Sonde und der ersten Handhabungseinheit erstreckt, wobei die flexible Kommunikationsleitung es ermöglicht, dass der Temperaturfühler in mehreren Orientierungen relativ zu der ersten Handhabungseinheit positioniert wird; eine zweite Handhabungseinheit mit Dateneingabetasten, die zum Auswählen von Fleischauswahlpräferenzen des zu kochenden Lebensmittels zur Temperaturüberwachung und zum Auswählen einer mit der ausgewählten Fleischauswahl verbundenen Geschmackspräferenz, einer zweiten Flüssigkristallanzeige und einem Hochfrequenzempfängers betreibbar sind und dazu angepasst ist, die von dem Hochfrequenzsender übertragenen Temperaturmesswerte zu empfangen, wobei die zweite Handhabungseinheit zu einem zweiten Ort beweglich ist, der von der ersten Handhabungseinheit beabstandet ist, um eine kontinuierliche Überwachung der übertragenen Temperaturmesswerte während eines Kochvorgangs zu ermöglichen, wobei in der zweiten Handhabungseinheit ein Mikroprozessor vorgesehen ist, der in der Lage ist, Geschmackspräferenzen zu kalibrieren, die dem gekochten Lebensmittel zugeordnet sind, und einen Clip zum Tragen der zweiten Handhabungseinheit an einem Körper eines Bedieners.

EP 2 233 899 A1 offenbart ein gabelförmiges Fleischthermometer mit einer Verlängerung, einem überbrückenden Abstandshalter, zwei Sensorzinken mit akustischen Oberflächenwellen Temperatursensoren. Das gabelförmige Fleischthermometer wird in ein Stück Fleisch in der Muffel eines Backofens eingeführt, so dass die Temperaturdaten drahtlos an eine Kommunikationsschaltung übertragen werden, die sich unmittelbar außerhalb der Muffel befindet.

DE 31 19 496 A1 offenbart ein gabelförmiges Fleischthermometer mit drei spießförmigen Fühlerteilen, die in einem gemeinsamen Griff gehalten werden und über einen gemeinsamen Anschlussdraht oder über separate Anschlussdrähte mit einer Auswerteeinheit verbunden sind. Das gabelförmige Fleischthermometer wird in ein Fleischstück eingeführt, um die Fleischtemperatur während des Garens in einem Mikrowellenofen zu messen.

Es ist die Aufgabe der vorliegenden Erfindung, die Nachteile des Standes der Technik zumindest teilweise zu überwinden und insbesondere eine besonders nutzerfreundliche Möglichkeit zur Temperaturmessung mittels eines Kerntemperaturfühlers über einen weiten Anwendungsbereich bereitzustellen.

Diese Aufgabe wird gemäß den Merkmalen des unabhängigen Anspruchs gelöst. Bevorzugte Ausführungsformen sind insbesondere den abhängigen Ansprüchen entnehmbar. Die Aufgabe wird gelöst durch einen Kerntemperaturfühler, aufweisend
- einen ersten Einsteckabschnitt mit mindestens einem Temperatursensor,
- einen im Vergleich zum ersten Einsteckabschnitt unterschiedlich ausgebildeten zweiten Einsteckabschnitt mit mindestens einem Temperatursensor, wobei der erste Einsteckabschnitt und der zweite Einsteckabschnitt zur wahlweisen Messung einer Temperatur eines Guts, insbesondere Garguts, angeordnet sind, und
- eine mit den Temperatursensoren verbundenen Datenübertragungseinrichtung, die dazu eingerichtet ist, mittels des mindestens einen Temperatursensors mindestens eines der Einsteckabschnitte abgefühlte Temperaturmessdaten insbesondere drahtlos an eine externe Instanz (wie einen Ofen, en Kochfeld, ein mobilen Nutzerendgerät usw.) zu übermitteln.

Durch diesen Kerntemperaturfühler wird der Vorteil erreicht, dass zwei unterschiedliche Einsteckabschnitte bereitgestellt werden, anhand derer wahlweise die Temperatur von Gargütern unter unterschiedlichen Anwendungszwecken messbar ist, beispielsweise unterschiedliche Gargüter (z.B. Lebensmittel, Wasser usw.) und/oder Gargüter unter unterschiedlichen Behandlungsbedingungen (z.B. unterschiedlichen Temperaturen und/oder Zubereitungsarten). Ein Nutzer kann insbesondere denjenigen Einsteckabschnitt zur Kontaktierung mit dem Gargut auswählen, welcher besser oder sogar nur zur Temperaturmessung für ein bestimmtes Gargut und/oder eine bestimmte Temperatur und/oder Zubereitungsarten geeignet ist. Auf eine Verwendung unterschiedlicher Kerntemperaturfühler für unterschiedliche Anwendungszwecke kann verzichtet werden.

Der Kerntemperaturfühler kann insbesondere dazu verwendet werden, eine Kerntemperatur von Gargut abzufühlen, ist aber nicht darauf beschränkt, sondern kann auch als allgemeiner Temperatursensor bezeichnet werden. Daher kann der Kerntemperaturfühler auch einfach als Temperaturfühler bezeichnet werden, insbesondere als Multifunktions-Temperaturfühler.

Der Kerntemperaturfühler kann insbesondere zum Abfühlen einer Temperatur von Gargut während eines Garvorgangs verwendet werden ("Gargut-Temperaturfühler"), ist aber nicht darauf beschränkt. So kann der Kerntemperaturfühler beispielsweise auch dazu verwendet werden, eine Temperatur von erhitztem Wasser, z.B. in einem Babyfläschchen, von warmgehaltenen Gut, von Kühlgut, z.B. Gefriergut, usw. zu messen.

Unter einem Kerntemperaturfühler kann insbesondere ein Temperaturmesseinrichtung verstanden werden, bei der ein Einsteckbereich in das auszumessende Gargut eingeführt wird und dann die Innentemperatur des Garguts abfühlt.

Dass der erste Einsteckabschnitt und der zweite Einsteckabschnitt zur wahlweisen Messung einer Temperatur eines Guts, insbesondere Garguts, angeordnet sind, umfasst insbesondere, dass der erste Einsteckbereich und der zweite Einsteckbereich unterschiedliche Einsteckbereiche darstellen, die nicht dazu vorgesehen sind, gleichzeitig in Gut eingesteckt zu werden. Insbesondere ist nicht gemeint, dass der erste Einsteckabschnitt und der zweite Einsteckabschnitt - insbesondere unmittelbar - hintereinander angeordnete (Teil-)Abschnitte eines einzigen Einsteckabschnitts bilden.

Unter einem Einsteckabschnitt kann ein Abschnitt des Kerntemperaturfühlers verstanden werden, der dazu vorgesehen ist, in das Gargut eingeführt bzw. eingesteckt zu werden. Der erste Einsteckabschnitt kann einen oder mehrere Temperatursensoren aufweisen. Der zweite Einsteckabschnitt kann einen oder mehrere Temperatursensoren aufweisen.

Dass der zweite Einsteckabschnitt zu dem ersten Einsteckabschnitt unterschiedlich ausgebildet ist, kann beispielsweise umfassen, dass der zweite Einsteckabschnitt im Vergleich zu dem ersten Einsteckabschnitt eine unterschiedliche Länge, eine unterschiedliche Breite, eine unterschiedliche Zahl, eine unterschiedliche Anordnung von Temperatursensoren und/oder eine unterschiedliche Beschaffenheit (z.B. in Bezug auf Struktur, Material, usw.) an seiner Oberfläche aufweist, usw.

Durch die Datenübertragungseinrichtung lassen sich von den Temperatursensoren abgefühlte Temperaturwerte auf eine externe, mit der Datenübertragungseinrichtung datentechnisch gekoppelte Instanz übertragen. Dazu ist eine Ausbildung als drahtlose, d.h., Daten drahtlos übertragende, Datenübertragungseinrichtung vorteilhaft, weil so eine vielgestaltige Positionierung des Kerntemperaturfühlers unabhängig von Kabeln durchführbar ist.

Es ist eine Weiterbildung, dass mindestens ein Einsteckabschnitt eine hohlzylindrische Hülse aufweist, in welcher der jeweilige mindestens eine Temperatursensor untergebracht ist. Ein freier Endabschnitt ("Spitze") der Hülse kann sich verjüngend ("spitz") ausgebildet sein, z.B. kegel- oder kegelstumpfförmig. Es ist eine Weiterbildung, dass die Hülse als ein kreiszylinderförmiger oder prismenförmiger Hohlzylinder ausgebildet ist.

Es ist eine Weiterbildung, dass mindestens ein Einsteckabschnitt eine metallische Hülse aufweist. Dies ergibt den Vorteil, dass sie thermisch gut leitfähig und zudem widerstandsfähig ist.

Es ist eine Weiterbildung, dass die der mindestens einen Temperatursensor als ein Heißleiter (NTC-Widerstände) und/oder Thermoelement ausgebildet ist bzw. vorliegt. Solche Temperatursensoren sind besonders preiswert, genau und langlebig.

Es ist eine erfindungsgemäße Ausgestaltung, dass der Kerntemperaturfühler eine lineare Grundform aufweist und der erste Einsteckabschnitt und der zweite Einsteckabschnitt entlang der linearen Grundform gegenüberliegende Endabschnitte des Kerntemperaturfühlers bilden. Dies erleichtert vorteilhafterweise ein Einstecken in das Gargut. Bei dieser Ausgestaltung sind Längsachsen der Einsteckabschnitte bzw. ihrer Hülsen insbesondere identisch, d.h., dass sie der Längsachse des Kerntemperaturfühlers entsprechen. Jedoch ist es grundsätzlich auch möglich, dass zumindest einer der Einsteckabschnitte bzw. dessen Hülse eine länglich gekrümmte Form aufweist, z.B. in Form eines gebogenen Hohlzylinders.

Es ist eine Weiterbildung, dass der erste Einsteckabschnitt breiter ist als der zweite Einsteckabschnitt. Die ermöglicht vorteilhafterweise eine Unterbringung von mehr und/oder größeren Komponenten in seinem Hohlraum als in dem zweiten Einsteckabschnitt, während der zweite Einsteckabschnitt besonders schmal gehalten werden kann, z.B. zum Einstecken in Verpackungen oder anderen Umhüllungen, beispielsweise in Vakuumverpackungen bei einer Vakuum- bzw./oder Sous-Vide-Behandlung von Gargut, ohne bei einem Herausziehen die Dichtigkeit der Verpackung zu verlieren.

Es ist eine Weiterbildung, dass der zweite Einsteckabschnitt bzw. dessen Hülse so dünn bzw. schmal ist, dass sie für Anwendungen mit Gargut mechanisch flexibel bzw. biegbar ist, insbesondere elastisch biegsam. So kann der zweite Einsteckabschnitt vorteilhafterweise besonders einfach und vielseitig in Gargut eingesteckt werden.

Im Fall eines kreiszylindrischen ersten Einsteckabschnitts hat es sich als vorteilhaft erwiesen, dass dieser einen Durchmesser zwischen 4 mm und 7 mm aufweist, besonders vorteilhaft von 6 mm.

Im Fall eines kreiszylindrischen zweiten Einsteckabschnitts hat es sich als vorteilhaft erwiesen, dass dieser einen Durchmesser zwischen 0,8 mm und 2 mm aufweist, besonders vorteilhaft zwischen 1 mm und 1,6 mm.

Es ist eine Weiterbildung, dass der erste Einsteckabschnitt länger ist als der zweite Einsteckabschnitt, was beispielsweise ein noch größeres Hohlraumvolumen zur Anordnung von Komponenten ermöglicht. Es ist eine Weiterbildung, dass erste Einsteckabschnitt kürzer ist als der zweite Einsteckabschnitt. Jedoch können beide Einsteckabschnitt auch gleich lang sein.

Es ist eine Weiterbildung, dass beide Einsteckabschnitte unmittelbar aneinandergrenzen. Es ist eine besonders vorteilhafte Weiterbildung, dass beide Einsteckabschnitte über einen thermisch schlecht leitfähigen Bereich voneinander getrennt sind, weil so ein Wärmeübertrag zwischen den beiden Einsteckabschnitten reduziert wird. Dies ist besonders vorteilhaft, wenn die Hülsen beider Einsteckabschnitte aus Metall bestehen.

Es ist eine erfindungsgemäße Ausgestaltung, dass eine Antenne der Datenübertragungseinrichtung in einem Antennenabschnitt zwischen dem ersten Einsteckabschnitt und dem zweiten Einsteckabschnitt angeordnet ist. Dies ergibt den Vorteil, dass bei einem eingesteckten bzw. eingeführten Einsteckabschnitt die Antenne freiliegt und dadurch in der Abstrahlung nicht durch das Gargut behindert wird. Zudem lässt sich die Antenne dann für eine gute Abstrahlcharakteristik vielgestaltig formen. Es ist eine Weiterbildung, dass der Antennenabschnitt eine Hülse aus elektrisch und/oder thermisch isolierendem Material wie Keramik oder Kunststoff besteht und die Antenne in der Hülse untergebracht ist. So wird eine besonders gut definierbare Abstrahlcharakteristik der Antenne ermöglicht. Es ist eine Weiterbildung, dass die Hülsen des Antennenabschnitts die Hülsen der Einsteckabschnitte kontaktiert.

Es ist eine Ausgestaltung, dass eine Elektronik und eine Batterie der Datenübertragungseinrichtung in dem ersten Einsteckabschnitt angeordnet ist, insbesondere falls dieser breiter ist als der zweite Antennenabschnitt. So wird der Vorteil erreicht, dass der Kerntemperaturfühler besonders kompakt aufbaubar ist. Insbesondere kann der erste Einsteckabschnitt dann zum Einstecken in Gargut vorgesehen sein, dass sich im Inneren nicht stark erwärmt, z.B. in ein Fleischstück oder Fisch ("meat probe"). Die Elektronik kann z.B. ein Bluetooth-, WLAN-, Funk- usw. Modul sein, an das eine Antenne der Datenübertragungseinrichtung angeschlossen ist. Das Bluetooth-Modul, z.B. ausgestaltet als Bluetooth-Baustein, kann z.B. im Frequenzbereich um 2,4 GHz senden, wobei die Antenne entsprechend an diesen Frequenzbereich angepasst ist. Die Batterie ist insbesondere eine wiederaufladbare Batterie ("Akku"), was vorteilhafterweise besonders nutzerfreundlich ist, da auf einen Batteriewechsel verzichtet werden kann.

Es ist eine Ausgestaltung, dass der Kerntemperaturfühler einen Ladeanschluss zum Aufladen der wiederaufladbaren Batterie aufweist, was vorteilhafterweise besonders nutzerfreundlich ist.

Es ist eine konstruktiv besonders einfache Weiterbildung, dass der Ladeschluss an einen positiven Pol der wiederaufladbaren Batterie angeschlossen ist und der negative Pol der Batterie mit der elektrisch leitfähigen, insbesondere metallischen, Hülse des ersten Einsteckabschnitts verbunden ist. Die Hülse des ersten Einsteckabschnitts kann dann einfach mit Masse verbunden werden. Auf eine zweiadrige Spannungszuführung von dem Ladeanschluss zu der Batterie kann dann verzichtet werden.

Es ist eine Weiterbildung, dass ein Gargerät oder eine dedizierte Halterung für den Kerntemperaturfühler eine Aufnahme zum Aufnehmen oder Lagern des Kerntemperaturfühlers aufweist. Diese kann als Ladestation für den Kerntemperaturfühler ausgebildet sein und dazu z.B. einen metallischen Bereich aufweisen, der bei einer abgenommenen Griffhülse des Kerntemperaturfühlers eine elektrisch leitende Hülse eines Einsteckabschnitts kontaktiert und auf einem Bezugspotenzial wie Masse o.ä. liegt. Eine solche Ladestation kann auch ein auf einem insbesondere positiven elektrischen Potenzial liegendes Ladekabel zum Anschluss an den Ladeanschluss des Kerntemperaturfühlers aufweisen. Alternativ zu einem Ladekabel kann auch eine elektrisch kontaktierende Auflagefläche oder ein Induktor vorhanden sein.

Es ist eine Ausgestaltung, dass in dem ersten Einsteckabschnitt eine Platine angeordnet ist, die mit der Elektronik der Datenübertragungseinrichtung sowie mit Bausteinen einer Auswerteeinrichtung bestückt ist, die Auswerteeinrichtung mit den Temperatursensoren und der Elektronik der Datenübertragungseinrichtung elektrisch verbunden ist und die Auswerteeinrichtung dazu eingerichtet ist, Messsignale der Temperatursensoren in durch die Datenübertragungseinrichtung übertragbare Messdaten umzuwandeln. So wird eine einfach bestückbare und in die Hülse des ersten Einsteckabschnitts besonders einfach einsetzbare Einheit bereitgestellt.

Es ist eine Ausgestaltung, dass auf der Platine ferner der mindestens eine Temperatursensor des ersten Einsteckabschnitts angeordnet ist. Dies ermöglich eine ganz besonders einfache Anordnung des mindestens einen Temperatursensors in dem ersten Einsteckabschnitt.

Es ist eine Ausgestaltung, dass die Batterie näher an einer Spitze des ersten Einsteckabschnitts bzw. dessen Hülse angeordnet ist als die Platine, insbesondere in einem spitzennahen Endbereich des Hohlraums des ersten Einsteckabschnitts. So wird der Vorteil erreicht, dass eine vergleichsweise großvolumige Batterie in dem ersten Einsteckabschnitt unterbringbar ist, ohne eine Verdrahtung innerhalb des Hohlraums zu behindern. Diese Ausgestaltung ist besonders vorteilhaft, wenn der Ladeschluss an einen positiven Pol der wiederaufladbaren Batterie angeschlossen ist und der negative Pol der Batterie mit der elektrisch leitfähigen, insbesondere metallischen, Hülse des ersten Einsteckabschnitts verbunden ist, weil dann eine elektrische Kontaktierung des negativen Pols der Batterie über einfache elektrische Kontakte mit einer Innenseite der Hülse ohne Verdrahtung umsetzbar ist.

Es ist eine Ausgestaltung, dass in dem ersten Einsteckabschnitt mehrere in Längsrichtung des ersten Einsteckabschnitts beabstandet angeordnete Temperatursensoren angeordnet sind. So wird der Vorteil erreicht, dass der erste Einsteckabschnitt als ortsauflösender Einsteckabschnitt dienen kann, z.B. zur ortsaufgelösten Temperaturmessung in einem Fleischstück oder in Fisch. Dies kann auf grundsätzlich bekannte Weise dazu verwendet werden, einem Nutzer einen Hinweis auf ein korrektes Einstecken in das Gargut zu geben und/oder um eine minimale Kerntemperatur besonders zuverlässig zu erfassen.

Es ist eine Ausgestaltung, dass in dem zweiten Einsteckabschnitt nur mindestens ein Temperatursensor angeordnet ist. So wird der Vorteil erreicht, dass der zweite Einsteckabschnitt besonders einfach und preiswert aufgebaut ist und zudem hochgradig temperaturbeständig ist, da er keine temperaturempfindlicheren Bauteile wie Elektronikbausteine, Batterien usw. aufweist. Der mindestens eine Temperatursensor des zweiten Einsteckabschnitts kann z.B. mittels mindestens eines durch deren Hülse geführtes Kabel mit der in dem ersten Einsteckabschnitt untergebrachten Auswerteeinrichtung verbunden sein.

Es ist eine Weiterbildung, dass in dem zweiten Einsteckabschnitt (genau) ein Temperatursensor angeordnet ist, insbesondere in der Nähe der Spitze des zweiten Einsteckabschnitts. Dies ergibt den Vorteil, dass bei ganz besonders einfachem und preiswerten Aufbau eine Temperaturmessung in Gargut, das eine vergleichsweise gleichmäßige Temperatur bzw. einen geringen Temperaturgradienten aufweist, ausreichend genau messbar ist.

Es ist eine Ausgestaltung, dass auf den ersten Einsteckabschnitt eine erste Griffhülse lösbar aufsteckbar ist und auf den zweiten Einsteckabschnitt eine zweite Griffhülse lösbar aufsteckbar ist. So wird der Vorteil erreicht, dass sich der Kerntemperaturfühler sicher handhaben lässt. Zur Nutzung eines Einsteckabschnitts wird dann einfach die darübergezogene Griffhülse abgezogen und kann nach Gebrauch wieder aufgesteckt werden.

Es ist eine Weiterbildung, dass die Griffhülsen aus einem thermisch schlecht leitenden Material wie hochtemperaturfestem Kunststoff bestehen. Diese erleichtert es einem Nutzer, die Griffhülsen zu greifen.

Es ist eine Ausgestaltung, dass zwischen dem ersten Einsteckabschnitt und dem zweiten Einsteckabschnitt ein Haltebereich angeordnet ist, der dazu eingerichtet ist, die erste Griffhülse und die zweite Griffhülse kraftschlüssig und/oder formschlüssig zu halten. Dadurch wird eine sichere Haltung der Griffhülse ermöglicht. Der Haltebereich kann beispielsweise in Richtung des jeweiligen Einsteckabschnitts ein vorstehendes Gewinde aufweisen, auf das die jeweilige Griffhülse, die ein passendes Gegengewinde aufweist, aufschraubbar ist. Alternativ können der Haltebereich und die Griffhülse(n) beispielsweise durch einen Bajonettverschluss oder einen kraftschlüssigen Steckverschluss miteinander verbunden werden. Der Haltebereich kann an oder mit dem Antennenabschnitt ausgeformt bzw. vorhanden sein.

Es ist eine besonders vorteilhafte Ausgestaltung, dass zumindest
- der erste Einsteckabschnitt breiter ist als der zweite Einsteckabschnitt,
- in dem ersten Einsteckabschnitt die Platine, die mit der Elektronik der Datenübertragungseinrichtung, sowie mit den Bausteinen der Auswerteeinrichtung bestückt ist, sowie die, insbesondere wiederaufladbaren, Batterie angeordnet sind,
- in dem zweiten Einsteckabschnitt nur mindestens ein Temperatursensor angeordnet ist, insbesondere in der Nähe der Spitze des zweiten Einsteckabschnitts.

Durch diese Ausgestaltung wird der Vorteil erreicht, dass der erste Einsteckabschnitt zum Einstecken in Gargut mit einer Temperatur vorgesehen sein kann, die vergleichsweise niedrig ist, z.B. zwischen 30 °C und 100 °C liegt, beispielsweise in ein Fleischstück. Dadurch werden die in dem ersten Einsteckabschnitt befindlichen temperaturempfindlichen Bauteile wie die Elektronik und die Batterie durch das Gargut vor hohen Temperaturen geschützt. Die Komponenten des zweiten Einsteckabschnitts sind hingegen vergleichsweise temperaturunempfindlich und können z.B. Umgebungstemperaturen von bis zu 250 °C bis 300 °C aushalten. Ein solche Verwendungen kann bspw. für eine Nutzung als Kerntemperaturfühler für ein Fleischstück, das in einem Backofen bei Garraumtempertaturen typischerweise zwischen 200 °C und 250 °C gegart wird, vorteilhaft sein.

Ist hingegen der zweite Einsteckabschnitt zum Einstecken in Gargut vorgesehen, kann die Temperatur des Garguts wesentlich höher sein, beispielsweise zum Abfühlen einer Temperatur von Öl in einer Pfanne oder Fritteuse von typischerweise ca. 200°C bis 250 °C oder zum Abfühlen einer Temperatur in Zucker von typischerweise ca. 150 °C. Dabei braucht nur darauf geachtet zu werden, dass die Temperatur in der Umgebung des Garguts nicht zu hoch wird, um die in dem ersten Einsteckabschnitt befindlichen Komponenten nicht zu schädigen.

Eine Temperaturabfühlung mittels des ersten Einsteckabschnitts ist also besonders geeignet für Gargut mit eher niedrigen Temperaturen (z.B. von bis zu 100°C bis 150°C ), wobei die Umgebungstemperatur des Garguts eher hoch sein kann (z.B. von bis zu 300 °C).

Eine Temperaturabfühlung mittels des zweiten Einsteckabschnitts ist besonders geeignet für Garabläufe, bei denen die Umgebungstemperatur des Garguts eher niedrig ist (z.B. von bis zu 100°C bis 150°C). Dabei kann die Temperatur des Garguts selbst eher hoch sein, braucht es aber nicht zu sein. Wie bereits oben ausgeführt, ist der zweite Einsteckabschnitt auch besonders geeignet für den Fall, dass das durch den Einsteckabschnitt erzeugte Loch klein sein soll, z.B. bei Einstecken in einen Vakuumbeutel beim Sous-Vide-Garen. Weist der zweite Einsteckabschnitt nur einen Temperatursensor auf, ist er besonders vorteilhaft nutzbar für Gargut, in dem ein nur geringer Temperaturgradient vorliegt.

Die Aufgabe wird auch gelöst durch ein System (im Folgenden ohne Beschränkung der Allgemeinheit als "Temperaturüberwachungssystem" bezeichnet), mindestens aufweisend den Kerntemperaturfühler wie oben beschrieben und eine mit der Datenübertragungseinrichtung des Kerntemperaturfühlers datentechnisch drahtlos koppelbare Anzeigeeinrichtung einer anderen Instanz, wobei die Anzeigeeinrichtung dazu eingerichtet ist, von der Datenübertragungseinrichtung des Kerntemperaturfühlers übertragene Messdaten anzuzeigen. Das System kann analog zu dem Kerntemperaturfühler ausgebildet werden und weist die gleichen Vorteile auf. Außerdem wird es vorteilhafterweise so ermöglicht, die von dem Kerntemperaturfühler gemessene Temperatur(en) in Echtzeit auf der Anzeigeeinrichtung abzulesen.

Es ist eine Ausgestaltung, dass die Anzeigeeinrichtung eine Komponente eines Gargeräts ist und das Gargerät eine Datenübertragungseinrichtung aufweist, die mit der Anzeigeeinrichtung datentechnisch verbunden ist. So kann der Nutzer die von dem Kerntemperaturfühler gemessene Temperatur(en) in Echtzeit auf der Anzeigeeinrichtung des Gargeräts ablesen. Die Anzeigeeinrichtung kann mit der Datenübertragungseinrichtung des Gargeräts direkt oder indirekt über weitere Logikeinheiten wie eine Steuereinrichtung o.ä. verbunden sein. Die Anzeigeeinrichtung kann z.B. ein Bildschirm wie ein LCD- oder OLED-Bildschirm sein.

Das Gargerät kann z.B. ein Grill, Backofen, Dampfbehandlungsgerät, Sous-Vide-Gerät oder eine beliebige Kombination davon sein. Zusätzlich oder alternativ kann das Gargerät ein Kochfeld sein oder aufweisen.

Es ist eine Weiterbildung, dass das Gargerät dazu eingerichtet ist, einen Garablauf beruhend auf den des Kerntemperaturfühlers übertragene Temperaturdaten zu steuern, beispielsweise eine Gartemperatur anzupassen, einen Garablauf mit Erreichen eines vorgegebenen Temperaturschwellwerts abzubrechen und/oder mit Erreichen eines vorgegebenen Temperaturschwellwerts die Garraumtemperatur zu senken, z.B. auf eine Warmhaltetemperatur.

Es ist eine Ausgestaltung, dass die Anzeigeeinrichtung eine Komponente eines mobilen Nutzerendgeräts ist und das mobile Nutzerendgerät eine Datenübertragungseinrichtung aufweist, die mit der Anzeigeeinrichtung datentechnisch verbunden ist. So kann der Nutzer die von dem Kerntemperaturfühler gemessene Temperatur(en) in Echtzeit auf dem mobilen Nutzerendgerät ablesen. Dies kann besonders vorteilhaft sein, wenn das Gargerät nicht zur Datenkommunikation mit dem Kerntemperaturfühler ausgebildet ist, z.B. weil es keine entsprechende Datenübertragungseinrichtung aufweist. Das mobile Nutzerendgerät kann beispielsweise ein Smartphone, Tablet, Smartwatch usw. sein. Das mobile Nutzerendgerät ist zum Zusammenwirken mit dem Kerntemperaturfühler eingerichtet, bspw. dadurch, dass auf ihm ein entsprechenden Anwendungsprogramm ("App", z.B. "Home Connect") abläuft.

Ist das Gargerät mit dem mobilen Nutzerendgerät datentechnisch koppelbar, weist aber keine Datenübertragungseinrichtung zum Empfang von Daten von dem Kerntemperaturfühler auf, kann es in einer Weiterbildung dazu eingerichtet sein, die Temperaturdaten des Kerntemperaturfühlers von dem mobilen Nutzerendgerät zu empfangen und den Garablauf so entsprechend steuern (z.B. eine Gartemperatur senken, den Garvorgang abbrechen usw.).

Es ist eine Weiterbildung, dass an der Anzeigeeinheit sowohl die von dem ersten Einsteckabschnitt abgefühlte(n) Temperatur(en) als auch die von dem zweiten Einsteckabschnitt abgefühlte(n) Temperatur(en) angezeigt wird bzw. werden. Dies ergibt den Vorteil, dass ein Nutzer darauf hingewiesen werden kann, dass die Temperatur(en) des nicht in das Gargut eingesteckten Einsteckabschnitts bzw. der zugehörigen Griffhülse möglicherweise zu hoch sind, um von einem Nutzer sicher gegriffen zu werden. Alternativ oder zusätzlich kann mit Überschreiten eines Temperaturschwellwerts in dem nicht eingesteckten Einsteckabschnitt, z.B. von 100 °C oder höher, der Garvorgang abgebrochen werden oder eine Garraumtemperatur gesenkt werden.

Es ist eine Weiterbildung, dass durch einen Nutzer angebbar ist, welcher Einsteckabschnitt zur Messung des Guts verwendet wird oder werden soll. Er kann diese Auswahl z.B. an seinem mobilen Nutzerendgerät oder an einem Gargerät vornehmen. Es ist eine zusätzliche oder alternative Weiterbildung, dass automatisch erkennbar ist, welcher Einsteckabschnitt zur Messung des Guts verwendet wird oder werden soll, beispielsweise über eine automatische Erkennung, ob eine Griffhülse nur eines Einsteckabschnitts abgezogen ist, und dann dieser Einsteckabschnitt zur Temperaturmessung von Gut herangezogen wird. Eine andere Möglichkeit zur automatischen Erkennung besteht beispielsweise darin, dass die an den Einsteckbereichen gemessenen Temperaturen und/oder Temperaturverläufe anhand von Regeln, Rechenanweisungen usw. plausibilisiert werden. Wird der Kerntemperaturfühler beispielsweise von einem Backofen verwendet und steigen die Temperaturen an beiden Einsteckbereichen, aber an dem ersten Einsteckbereich langsamer als an dem zweiten Einsteckbereich, kann daraus geschlossen werden, dass der erste Einsteckbereich in das Gargut (z.B. ein Fleischstück) eingesteckt ist, da die Innentemperatur des Garguts typischerweise merklich langsamer ansteigt als die Ofentemperatur. Auch kann z.B. eine Temperatur im Bereich typischer Kühlguttemperaturen (z.B. zwischen -24 °C und +8 °C) ein Hinweis darauf sein, dass derjenige Einsteckbereich, der ein solche Temperatur misst, der in das Kühlgut eingesteckte Einsteckbereich ist, usw.

Die Aufgabe wird auch gelöst durch entsprechende Verfahren zur Nutzung des oben beschriebenen Temperaturfühlers.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht eine Skizze eines Kerntemperaturfühlers ohne Griffhülsen;
- Fig.2: zeigt als Schnittdarstellung in Seitenansicht eine Skizze des Kerntemperaturfühlers aus Fig.1 mit Griffhülsen;
- Fig.3: zeigt eine Skizze eines möglichen Anwendungsfalls unter Nutzung eines Temperaturüberwachungssystems mit dem Kerntemperaturfühler aus Fig.1 und Fig.2; und
- Fig.4: zeigt eine Skizze eines weiteres möglichen Anwendungsfalls unter Nutzung eines Temperaturüberwachungssystems mit dem Kerntemperaturfühler aus Fig.1 und Fig.2.

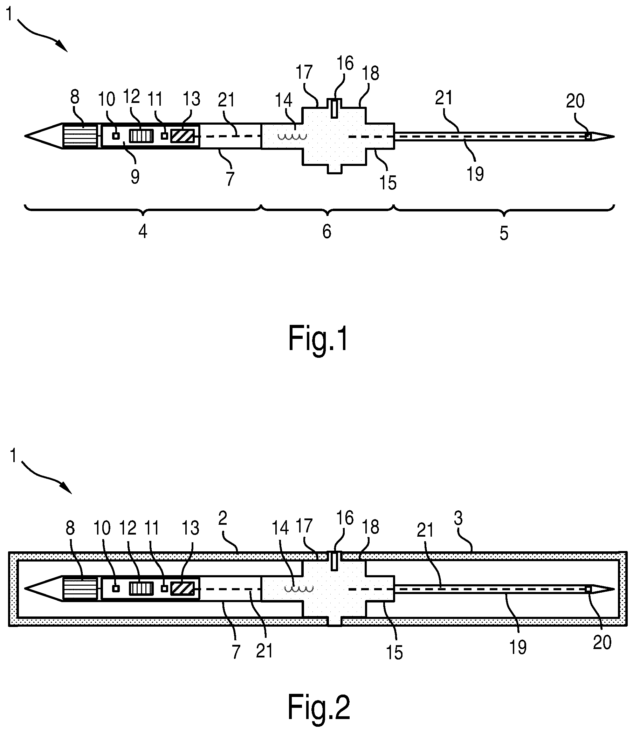

**Fig.1** zeigt als Schnittdarstellung in Seitenansicht einen Kerntemperaturfühler 1 ohne Griffhülsen 2, 3 (siehe Fig.2). Der Kerntemperaturfühler 1 weist eine geradlinige Grundform mit einem geradlinigen ersten Einsteckabschnitt 4 und einem dazu identisch ausgerichteten geradlinigen zweiten Einsteckabschnitt 5 auf. Die beiden Einsteckabschnitte 4 und 5 sind durch einen zwischen ihnen angeordneten Antennenabschnitt 6 voneinander getrennt.

Der erste Einsteckabschnitt 4 weist eine hohlzylindrische Hülse 7 aus Metall (z.B. Edelstahl oder Aluminium) auf, die an ihrem freien Ende bzw. an ihrer Spitze spitz zuläuft. In dem ersten Einsteckabschnitt 4 ist im Bereich der Spitze eine wiederaufladbare Batterie 8 untergebracht. In dem ersten Einsteckabschnitt 4 ist ferner eine Platine 9 untergebracht, die mit mehreren Temperatursensoren 10, 11, einer Auswerteeinrichtung 12 und einer Elektronik einer Datenübertragungseinrichtung in Form z.B. eines Bluetooth-Chips 13 bestückt ist. Zumindest die Auswerteeinrichtung 12 und der Bluetooth-Chips 13 werden über die Batterie 8 mit elektrischer Energie versorgt.

Die Temperatursensoren 10, 11 sind in Längsrichtung des ersten Einsteckabschnitts 4 beabstandet voneinander angeordnet. Die Auswerteeinrichtung 12 ist mit den Temperatursensoren 10, 11 über Leiterbahnen (o. Abb.) der Platine 9 verbunden, so dass die Auswerteeinrichtung 12 die Messignale der Temperatursensoren 10, 11 in zu dem Bluetooth-Chip 13 kompatible digitale Temperaturdaten umwandeln kann. Dazu kann die Auswerteeinrichtung 12 z.B., einen A/D-Wandler aufweisen. Diese digitalen Temperaturdaten werden an den Bluetooth-Chip 13 über Leiterbahnen der Platine 9 weitergeleitet. Die Temperaturdaten werden von dem Bluetooth-Chip 13 so umgewandelt, dass sie über eine in dem Antennenabschnitt 6 untergebrachte Bluetooth-Antenne 14 spezifikationskonform ausgesendet werden können, beispielsweise auf einer Frequenz von 2,4 GHz. Der Antennenabschnitt 6 weist dazu eine elektrisch nichtleitende Umhüllung 15 auf, z.B. aus Keramik oder Kunststoff. Zumindest die Auswerteeinrichtung 12 und der Bluetooth-Chips 13 werden über die Batterie 8 mit elektrischer Energie versorgt. Der Bluetooth-Chip und die Antenne 14 bilden somit eine Datenübertragungseinrichtung 13, 14.

In die Umhüllung 15 ist auch ein Ladeanschluss 16 eingeformt, der über eine elektrische Leitung (o. Abb.) mit einem Pluspol der Batterie 8 verbunden ist und über den die Batterie 8 aufladbar ist, wenn die Hülse 7, die mit dem Minuspol der Batterie 8 elektrisch verbunden ist, auf einem Bezugspotenzial wie Masse liegt.

Die Umhüllung 15 ist außenseitig ferner so ausgeformt, dass sie zwei Halteabschnitte 17, 18 bildet, die erste Griffhülse 2 bzw. die zweite Griffhülse 3 aufgesteckt auf dem ersten Einsteckabschnitt 4 bzw. dem zweiten Einsteckabschnitt 5 kraftschlüssig und/oder formschlüssig halten, wie in Fig.2 gezeigt. Dazu können die Halteabschnitt 17 und 18 z.B. als Gewinde, Bajonettanschlüsse, Steckrohre usw. ausgebildet sein.

Der zweite Einsteckabschnitt 5 weist ebenfalls eine hohlzylindrische Hülse 19 aus Metall auf, die an ihrem freien Ende bzw. an ihrer Spitze spitz zuläuft. Jedoch ist die Hülse 19 schmaler als die erste Hülse 7, z.B. 1 mm bis 1,6 mm im Durchmesser anstatt z.B. ca. 6 mm im Durchmesser wie die Hülse 7. Die Hülse 19 ist dadurch mechanisch flexibel. In dem zweiten Einsteckabschnitt 5 ist im Bereich der Spitze ein Temperatursensor 20 eingesetzt, der mittels einer durch die Hülse 19 und die Hülse 7 geführten elektrischen Leitung 21 mit der Auswerteeinrichtung 12 verbunden ist. Es können also auch die von dem Temperatursensor 20 ausgegebenen Messignale als Temperatur(mess)daten über die Antenne 14 ausgesandt werden.

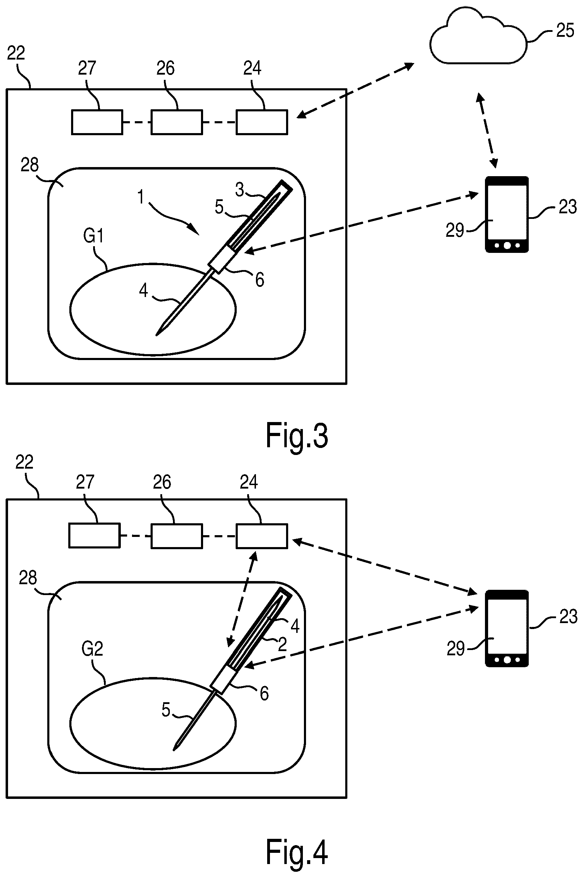

Fig.3 zeigt eine Skizze eines möglichen Anwendungsfalls unter Nutzung eines Temperaturüberwachungssystems mit dem Kerntemperaturfühler 1, einem Backofen 22 und einem mobilen Nutzerendgerät in Form z.B. eines Smartphones 23. Der Backofen 22 weist eine Datenübertragungseinrichtung 24 auf, die zur Datenübertragung mit dem Smartphone 23 geeignet ist, aber nicht zum Empfang der Temperaturdaten von dem Kerntemperaturfühler 1. Das Smartphone 23 ist zum Empfang der Temperaturdaten von dem Kerntemperaturfühler 1, z.B. mittels eines Bluetooth-Moduls, und zum Datenaustausch mit der Datenübertragungseinrichtung 24, z.B. mittels eines WLAN-Moduls, eingerichtet.

Vorliegend ist der Kerntemperaturfühler 1 mit seinem ersten Einsteckabschnitt 4 in einem Gargut G1 wie Fleisch oder Fisch eingesteckt (insbesondere mindestens bis zu einer auf einer Außenseite der Hülse 7 angebrachten Markierung) und misst mittels seiner Temperatursensoren 10, 11 eine Kerntemperatur. Der zweite Einsteckabschnitt 5 ist von der zweiten Griffhülse 3 abgedeckt. Die zweite Griffhülse 3 mit dem zweiten Einsteckabschnitt 5 und der Antennenabschnitt 6 liegen also in einem Garraum 28 des Backofens 22 frei. Dieser Anwendungsfall kann hier z.B. ein Garen des Garguts G1 bei einer Garraumtemperatur von bis zu 250°C sein. Dabei wird der erste Einsteckabschnitt 4 mit den darin vorhandenen eher wärmeempfindlichen Bauelementen 8, 12, 13 nur durch das Gargut G1 erwärmt. Da dieses Gargut G1 typischerweise nicht bis zum vollständigen Durchtrocknen gegart wird, liegt seine Temperatur typischerweise im einem Bereich zwischen 30 °C und 100 °C. Dadurch wiederum wird auch der erste Einsteckabschnitt 4 nur bis zu einer solchen niedrigen Temperatur aufgewärmt, wodurch die wärmeempfindliche Bauelemente 8, 12, 13 thermisch nicht überlastet werden. Der Antennenabschnitt 6, die zweite Griffhülse 3 und der zweite Einsteckabschnitt 5 sind hingegen so ausgebildet, dass sie auch die höheren Garraumtemperaturen unbeschadet aushalten.

Die von der Antenne 14 ausgesandten Temperaturmessdaten werden von dem Smartphone 23 empfangen, wobei dieses so eingerichtet ist, dass ein Nutzer die Temperaturmessdaten auf einem zugehörigen Bildschirm 29 ansehen kann.

Das Smartphone 23 ist ferner dazu eingerichtet, die Temperaturmessdaten an die Datenübertragungseinrichtung 24 des Backofens 22 weiterzuleiten, z.B. direkt oder - wie dargestellt - über ein Netzwerk 25 wie das Internet o.ä. Die Datenübertragungseinrichtung 24 leitet die empfangenen Temperaturmessdaten an eine Steuereinrichtung 26 des Backofens 22 weiter, wobei die Steuereinrichtung 26 die Temperaturmessdaten wiederum an einen Bildschirm 27 zur Anzeige weiterleiten kann. Ein Nutzer kann die Temperaturmessdaten also auch an dem Backofen 22 betrachten. In einer Variante wird das Smartphone 23 nur im Sinn einer "Relaisstation" dazu verwendet, die Temperaturmessdaten an den Backofen 22 weiterzuleiten.

Die Steuereinrichtung 26 kann ferner dazu eingerichtet sein, auf Grundlage der Temperaturmessdaten einen Garvorgang zu steuern, z.B. eine Garraumtemperatur zu variieren, Zusatzfunktionen wie eine Dampfzugabe oder Einspeisung von Mikrowellen zu aktivieren und deaktivieren und/oder einen Garvorgang zu beenden.

In einigen der möglichen alternativen Anwendungsfälle kann anstelle des Backofens 1 ein auf einem Kochfeld aufgelegtes Gargeschirr oder ein Grill verwendet werden. In diesen Fällen können sich der Antennenabschnitt 6 und der zweite Einsteckabschnitt 5 mit der Griffhülse 3 in einer Umgebung befinden, deren Temperatur im Vergleich zu einem Backofen merklich geringer ist. Speziell in diesen Fällen kann es vorkommen, dass das Kochfeld oder der Grill keine Datenübertragungseinrichtung 24 aufweisen. Dann kann das Smartphone 23 primär zur Anzeige der empfangenen Temperaturmessdaten verwendet werden.

Fig.4 zeigt eine Skizze eines weiteres möglichen Anwendungsfalls unter Nutzung des Temperaturüberwachungssystems 1, 22, 23. aus Fig.3. Hierbei ist beispielhaft die Variante eingezeichnet, dass das Smartphone 23 direkt der Datenübertragungseinrichtung 24 des Backofens 22 kommunizieren kann.

Vorliegend ist der Kerntemperaturfühler 1 mit seinem zweiten Einsteckabschnitt 5 in einem Gargut G2 in Form eines von einem Vakuumbeutel umgebenen Lebensmittels eingesteckt und misst mittels seines Temperatursensors 20 die Temperatur des Lebensmittels, das bei den typischerweise geringen Temperaturen in dem Garraum 28 und dem Lebensmittel zwischen 30 °C und 80°C und den langen Garzeiten praktisch keinen Temperaturgradienten aufweist. Somit misst der zweite Einsteckabschnitt 5 die Temperatur des Lebensmittel mit hoher Genauigkeit. Dadurch, dass der zweite Einsteckabschnitt 5 einen nur geringen Durchmesser aufweist, wird der Vakuumbeutel in seiner Funktion auch dann nicht beeinträchtigt, wenn ein Nutzer den zweiten Einsteckabschnitt 5 wieder herauszieht.

Aufgrund der geringen Garraumtemperaturen wird ferner der freiliegende erste Einsteckabschnitt 4, der nun von der Griffhülse 2 umgeben ist, nicht beschädigt.

In einigen der möglichen alternativen Anwendungsfälle kann der zweite Einsteckabschnitt 5 in Gut eingesteckt sein, das Gargut oder anderes Gut sein kann (z.B. Wasser oder Öl), falls die Umgebungstemperaturen außerhalb des Guts vergleichsweise niedrig sind, z.B. 100 °C nicht überschreiten. Diese Bedingungen können z.B. beim Messen von Wasser in einem in einem Topf erwärmten Babyfläschchen, von Teewasser, von Öl in einer Pfanne oder einem Topf, von Zucker beispielsweise bei einer Karamellisierung usw. vorliegen. In diesen Fällen kann das Smartphone 23 insbesondere primär zur Anzeige der empfangenen Temperaturmessdaten verwendet werden. Ein weiterer möglicher Anwendungsfall kann derjenige sein, bei dem Gargut in einem Gargeschirr auf einem Kochfeld erhitzt wird und das Kochfeld eine Datenübertragungseinrichtung aufweist oder mit einer Datenübertragungseinrichtung verbunden ist. Dann können analog zum dem oben beschriebenen Anwendungsfall des Backofens 22 mit Datenübertragungseinrichtung 24 die auf das Kochfeld übertragenen Temperaturmessdaten dazu verwendet werden, einen Temperatureintrag in das Gargut zu variieren, z.B. durch Änderung einer Kochstufe.

### Bezugszeichenliste

- 1: Kerntemperaturfühler
- 2: Griffhülse
- 3: Griffhülse
- 4: Erster Einsteckabschnitt
- 5: Zweiter Einsteckabschnitt
- 6: Antennenabschnitt
- 7: Hülse
- 8: Batterie
- 9: Platine
- 10: Temperatursensor
- 11: Temperatursensor
- 12: Auswerteeinrichtung
- 13: Bluetooth-Chip
- 14: Antenne
- 15: Umhüllung
- 16: Ladeanschluss
- 17: Halteabschnitt
- 18: Halteabschnitt
- 19: Hülse
- 20: Temperatursensor
- 21: Leitung
- 22: Backofen
- 23: Smartphone
- 24: Datenübertragungseinrichtung
- 25: Netzwerk
- 26: Steuereinrichtung
- 27: Bildschirm des Backofens
- 28: Garraum
- 29: Bildschirm des Smartphones
- G1: Gargut
- G2: Gargut

## Patentansprüche

1. Kerntemperaturfühler (1), aufweisend
- einen ersten Einsteckabschnitt (4) mit mindestens einem Temperatursensor (10, 11),
- einen zu dem ersten Einsteckabschnitt (4) unterschiedlich ausgebildeten zweiten Einsteckabschnitt (5) mit mindestens einem Temperatursensor (20), wobei der erste Einsteckabschnitt (4) und der zweite Einsteckabschnitt (5) zur wahlweisen Messung einer Temperatur eines Guts (G1; G2) angeordnet sind, und
- eine mit den Temperatursensoren (10, 11, 20) verbundene Datenübertragungseinrichtung (13, 14), die dazu eingerichtet ist, mittels des mindestens einen Temperatursensors (10, 11, 20) mindestens eines der Einsteckabschnitte (4, 5) abgefühlte Temperaturmessdaten insbesondere drahtlos zu übermitteln, wobei
- der Kerntemperaturfühler (1) eine lineare Grundform aufweist und der erste Einsteckabschnitt (4) und der zweite Einsteckabschnitt (5) enlang der linearen Grundform gegenüberliegende Endabschnitte des Kerntemperaturfühlers (1) bilden und wobei
- eine Antenne (14) der Datenübertragungseinrichtung (13, 14) in einem Antennenabschnitt (6) zwischen dem ersten Einsteckabschnitt (4) und dem zweiten Einsteckabschnitt (5) angeordnet ist.

2. Kerntemperaturfühler (1) nach Anspruch 1, , wobei der erste Einsteckabschnitt (4) breiter ist als der zweite Einsteckabschnitt (5).

3. Kerntemperaturfühler (1) nach Anspruch 2, wobei der zweite Einsteckabschnitt (5) so schmal ist, dass er für Anwendungen mit Gargut mechanisch flexibel ist.

4. Kerntemperaturfühler (1) nach einem der vorhergehenden Ansprüche, wobei Längsachsen der Einsteckabschnitte (4, 5) einer Längsachse des Kerntemperaturfühlers (1) entsprechen.

5. Kerntemperaturfühler (1) nach einem der vorhergehenden Ansprüche, wobei eine Elektronik (13) der Datenübertragungseinrichtung (13, 14) und eine Batterie (8) in dem ersten Einsteckabschnitt (4) angeordnet ist.

6. Kerntemperaturfühler (1) nach Anspruch 5, wobei der Kerntemperaturfühler (1) einen Ladeanschluss (16) zum Aufladen der Batterie (8) aufweist.

7. Kerntemperaturfühler (1) nach einem der Ansprüche 5 bis 6, wobei in dem ersten Einsteckabschnitt (4) eine Platine (9) angeordnet ist, die mit der Elektronik (13) der Datenübertragungseinrichtung (13, 14) sowie mit Bausteinen einer Auswerteeinrichtung (12) bestückt ist, die Auswerteeinrichtung (12) mit den Temperatursensoren (10, 11, 20) und der Elektronik (13) der Datenübertragungseinrichtung (13, 14) elektrisch verbunden ist und die Auswerteeinrichtung (12) dazu eingerichtet ist, Messsignale der Temperatursensoren (10, 11, 20) in durch die Datenübertragungseinrichtung (13, 14) übertragbare Temperaturmessdaten umzuwandeln.

8. Kerntemperaturfühler (1) nach Anspruch 7, wobei auf der Platine (9) ferner der mindestens eine Temperatursensor (10, 11) des ersten Einsteckabschnitts (4) angeordnet ist.

9. Kerntemperaturfühler (1) nach einem den Ansprüche 7 bis 8, wobei die Batterie (8) näher an einer Spitze des ersten Einsteckabschnitts (4) angeordnet ist als die Platine (9).

10. Kerntemperaturfühler (1) nach einem der vorhergehenden Ansprüche, wobei in dem ersten Einsteckabschnitt (4) mehrere in Längsrichtung des ersten Einsteckabschnitts (4) beabstandet angeordnete Temperatursensoren (10, 11) angeordnet sind und in dem zweiten Einsteckabschnitt (5) ein Temperatursensor (20) angeordnet ist, insbesondere in der Nähe der Spitze des zweiten Einsteckabschnitts (5).

11. Kerntemperaturfühler (1) nach einem der vorhergehenden Ansprüche, wobei auf den ersten Einsteckabschnitt (4) eine erste Griffhülse (2) lösbar aufsteckbar ist und auf den zweiten Einsteckabschnitt (5) eine zweite Griffhülse (3) lösbar aufsteckbar ist.

12. Kerntemperaturfühler (1) nach Anspruch 11, wobei zwischen dem ersten Einsteckabschnitt (4) und dem zweiten Einsteckabschnitt (5) ein Haltebereich angeordnet ist, der dazu eingerichtet ist, die erste Griffhülse (2) und die zweite Griffhülse (3) kraftschlüssig und/oder formschlüssig zu halten.

13. Temperaturüberwachungssystem (1, 22, 23), mindestens aufweisend den Kerntemperaturfühler (1) nach einem der vorhergehenden Ansprüche und eine mit der Datenübertragungseinrichtung (13, 14) des Kerntemperaturfühlers (1) datentechnisch drahtlos koppelbare Anzeigeeinrichtung (27, 29), wobei die Anzeigeeinrichtung (27, 29) dazu eingerichtet ist, von der Datenübertragungseinrichtung (13, 14) des Kerntemperaturfühlers (1) übertragene Messdaten anzuzeigen.

14. Temperaturüberwachungssystem (1, 22, 23) nach Anspruch 13, wobei die Anzeigeeinrichtung (27) eine Komponente eines Gargeräts (22) ist und das Gargerät (23) eine Datenübertragungseinrichtung (24) aufweist, die mit der Anzeigeeinrichtung (27) datentechnisch verbunden ist.

15. Temperaturüberwachungssystem (1, 22, 23) nach einem der Ansprüche 13 bis 14, wobei die Anzeigeeinrichtung (29) eine Komponente eines mobilen Nutzerendgeräts (23) ist und das mobile Nutzerendgerät (23) eine Datenübertragungseinrichtung aufweist, die mit der Anzeigeeinrichtung (29) datentechnisch verbunden ist.

## Claims

1. Core temperature probe (1), having
- a first insertion portion (4) with at least one temperature sensor (10, 11),
- a section insertion portion (5) designed differently from the first insertion portion (4) with at least one temperature sensor (20), wherein the first insertion portion (4) and the second insertion portion (5) are arranged for selective measurement of a temperature of an item (G1; G2), and
- a data transmission facility (13, 14) connected to the temperature sensors (10, 11, 20), which is configured to transfer, in particular wirelessly, temperature measurement data sensed by means of the at least one temperature sensor (10, 11, 20) of at least one of the insertion portions (4, 5),
wherein
- the core temperature probe (1) has a linear basic shape and the first insertion portion (4) and the second insertion portion (5) form opposite end sections of the core temperature probe (1) along the linear basic shape and wherein
- an antenna (14) of the data transmission facility (13, 14) is arranged in an antenna section (6) between the first insertion portion (4) and the second insertion portion (5).

2. Core temperature probe (1) according to claim 1, wherein the first insertion portion (4) is wider than the second insertion portion (5).

3. Core temperature probe (1) according to claim 2, wherein the second insertion portion (5) is so narrow that it is mechanically flexible for use with food to be cooked.

4. Core temperature probe (1) according to one of the preceding claims, wherein longitudinal axes of the insertion portions (4, 5) correspond to a longitudinal axis of the core temperature probe (1).

5. Core temperature probe (1) according to one of the preceding claims, wherein an electronic system (13) of the data transmission facility (13, 14) and a battery (8) is arranged in the first insertion portion (4).

6. Core temperature probe (1) according to claim 5, wherein the core temperature probe (1) has a charging connection (16) for charging the battery (8).

7. Core temperature probe (1) according to one of claims 5 to 6, wherein a circuit board (9) is arranged in the first insertion portion (4), which is fitted with the electronic system (13) of the data transmission facility (13, 14) and with components of an evaluation facility (12), the evaluation facility (12) is electrically connected to the temperature sensors (10, 11, 20) and the electronic system (13) of the data transmission facility (13, 14) and the evaluation facility (12) is configured to convert measurement signals of the temperature sensors (10, 11, 20) into temperature measurement data which can be transferred by the data transmission facility (13, 14).

8. Core temperature probe (1) according to claim 7, wherein moreover the at least one temperature sensor (10, 11) of the first insertion portion (4) is arranged on the circuit board (9).

9. Core temperature probe (1) according to one of claims 7 to 8, wherein the battery (8) is arranged closer to a tip of the first insertion portion (4) than the circuit board (9).

10. Core temperature probe (1) according to one of the preceding claims, wherein a plurality of temperature sensors (10, 11) are arranged in the first insertion portion (4) at a distance relative to the longitudinal direction of the first insertion portion (4) and a temperature sensor (20) is arranged in the second insertion portion (5), in particular in the proximity of the tip of the second insertion portion (5).

11. Core temperature probe (1) according to one of the preceding claims, wherein a first handle sleeve (2) can be fitted to the first insertion section (4) in a detachable manner and a second handle sleeve (3) can be fitted to the second insertion section (5) in a detachable manner.

12. Core temperature probe (1) according to claim 11, wherein a stop region is arranged between the first insertion portion (4) and the second insertion portion (5) which is configured to hold the first handle sleeve (2) and the second handle sleeve (3) in the manner of a non-positive fit and/or positive fit.

13. Temperature monitoring system (1, 22, 23) having at least the core temperature probe (1) according to one of the preceding claims and a display facility (27, 29) which can be coupled wirelessly in terms of data technology to the data transmission facility (13, 14) of the core temperature probe (1), wherein the display facility (27, 29) is configured to display measurement data transferred by the data transmission facility (13, 14) of the core temperature probe (1).

14. Temperature monitoring system (1, 22, 23) according to claim 13, wherein the display facility (27) is a component of a cooking appliance (22) and the cooking appliance (23) has a data transmission facility (24) which is connected to the display facility (27) in terms of data technology.

15. Temperature monitoring system (1, 22, 23) according to one of claims 13 to 14, wherein the display facility (29) is a component of a mobile user terminal (23) and the mobile user terminal (23) has a data transmission facility which is connected to the display facility (29) in terms of data technology.

## Revendications

1. Sonde de température à cœur (1), comprenant :
- une première partie d'insertion (4) comportant au moins un capteur de température (10, 11),
- une deuxième partie d'insertion (5) configurée différemment de la première partie d'insertion (4) comportant au moins un capteur de température (20), dans laquelle la première partie d'insertion (4) et la deuxième partie d'insertion (5) sont agencées pour mesurer sélectivement une température d'une marchandise (G1, G2), et
- un dispositif de transmission de données (13, 14) relié aux capteurs de température (10, 11, 20) qui est conçu pour transmettre, en particulier sans fil, des données de température mesurées détectées au moyen de l'au moins un capteur de température (10, 11, 20) d'au moins une des parties d'insertion (4, 5),
dans laquelle
- la sonde de température à cœur (1) a une forme de base linéaire et la première partie d'insertion (4) et la deuxième partie d'insertion (5) forment des parties d'extrémité opposées de la sonde de température à cœur (1) le long de la forme de base linéaire, et dans laquelle
- une antenne (14) du dispositif de transmission de données (13, 14) est disposée dans une section d'antenne (6) entre la première partie d'insertion (4) et la deuxième partie d'insertion (5).

2. Sonde de température à cœur (1) selon la revendication 1, dans laquelle la première partie d'insertion (4) est plus large que la deuxième partie d'insertion (5).

3. Sonde de température à cœur (1) selon la revendication 2, dans laquelle la deuxième partie d'insertion (5) est tellement étroite qu'elle est mécaniquement flexible pour des utilisations avec des aliments.

4. Sonde de température à cœur (1) selon l'une des revendications précédentes, dans laquelle des axes longitudinaux des parties d'insertion (4, 5) correspondent à un axe longitudinal de la sonde de température à cœur (1).

5. Sonde de température à cœur (1) selon l'une des revendications précédentes, dans laquelle une électronique (13) du dispositif de transmission de données (13, 14) et une batterie (8) sont disposées dans la première partie d'insertion (4).

6. Sonde de température à cœur (1) selon la revendication 5, dans laquelle la sonde de température à cœur (1) comprend un connecteur de charge (16) pour recharger la batterie (8).

7. Sonde de température à cœur (1) selon l'une des revendications 5 à 6, dans laquelle une carte à circuit imprimé (9) est disposée dans la première partie d'insertion (4), laquelle est équipée de l'électronique (13) du dispositif de transmission de données (13, 14) ainsi que de modules d'un moyen d'évaluation (12), le moyen d'évaluation (12) est connecté électriquement aux capteurs de température (10, 11, 20) et à l'électronique (13) du dispositif de transmission de données (13, 14) et le moyen d'évaluation (12) est conçu pour convertir des signaux de mesure des capteurs de température (10, 11, 20) en des données de mesure de température transmissibles par le dispositif de transmission de données (13, 14).

8. Sonde de température à cœur (1) selon la revendication 7, dans laquelle l'au moins un capteur de température (10, 11) de la première partie d'insertion (4) est disposé en outre sur la carte à circuit imprimé (9).

9. Sonde de température à cœur (1) selon l'une des revendications 7 à 8, dans laquelle la batterie (8) est disposée plus près d'une pointe de la première partie d'insertion (4) que la carte à circuit imprimé (9).

10. Sonde de température à cœur (1) selon l'une des revendications précédentes, dans laquelle plusieurs capteurs de température (10, 11) disposés de façon espacée dans le sens longitudinal de la première partie d'insertion (4) sont disposés dans la première partie d'insertion (4) et un capteur de température (20) est disposé dans la deuxième partie d'insertion (5), en particulier à proximité de la pointe de la deuxième partie d'insertion (5).

11. Sonde de température à cœur (1) selon l'une des revendications précédentes, dans laquelle une première douille de préhension (2) peut être montée de manière détachable sur la première partie d'insertion (4) et une deuxième douille de préhension (3) peut être montée de façon détachable sur la deuxième partie d'insertion (5).

12. Sonde de température à cœur (1) selon la revendication 11, dans laquelle une zone de retenue est agencée entre la première partie d'insertion (4) et la deuxième partie d'insertion (5), laquelle est conçue pour maintenir la première douille de préhension (2) et la deuxième douille de préhension (3) par liaison à force et/ou par liaison de forme.

13. Système de surveillance de température (1, 22, 23), comprenant au moins la sonde de température à cœur (1) selon l'une des revendications précédentes et un dispositif d'affichage (27, 29) pouvant être couplé sans fil par une technique de transmission de données au dispositif de transmission de données (13, 14) de la sonde de température à cœur (1), dans lequel le dispositif d'affichage (27, 29) est conçu pour afficher des données de mesure transmises par le dispositif de transmission de données (13, 14) de la sonde de température à cœur (1).

14. Système de surveillance de température (1, 22, 23) selon la revendication 13, dans lequel le dispositif d'affichage (27) est une composante d'un appareil de cuisson (22) et l'appareil de cuisson (23) comprend un dispositif de transmission de données (24) qui est relié par une technique de transmission de données au dispositif d'affichage (27).

15. Système de surveillance de température (1, 22, 23) selon l'une des revendications 13 à 14, dans lequel le dispositif d'affichage (29) est une composante d'un terminal d'utilisateur mobile (23) et le terminal d'utilisateur mobile (23) comprend un dispositif de transmission de données, qui est relié par une technique de transmission de données au dispositif d'affichage (29).
